# EUROPEAN PATENT SPECIFICATION

(11) **EP 2 181 020 B1**
(45) Date of publication and mention of the grant of the patent: **30.11.2011**
(21) Application number: 07804881.6
(22) Date of filing: 29.08.2007
(51) Int. Cl.: B60N 2/48, B60N 2/427

(54) **VEHICLE SEAT WITH A STOWABLE HEAD RESTRAINT AND AN ANTI-WHIPLASH SYSTEM**
FAHRZEUGSITZ MIT EINER VERSTAUBAREN KOPFSTÜTZE UND EINEM ANTISCHLEUDERTRAUMASYSTEM
SIÈGE DE VÉHICULE AYANT UN APPUIE-TÊTE QUI PEUT ÊTRE RANGÉ ET UN SYSTÈME ANTI-COUP DE FOUET CERVICAL

(43) Date of publication of application: 05.05.2010
(73) Proprietor: Kongsberg Automotive AB, 56528 Mullsjö (SE); Autoliv Development AB, 447 83 Vårgårda (SE)
(72) Inventor: GOLIN, Mike, Dexter, MI 48130 (US); WALDYSSON, Hakan, S-56532 Mullsjö (SE); OLSSON, Markus, S-41304 Gothenburg (SE); KARLBERG, Rune, S-560 25 Bottnaryd (SE)
(74) Representative: UEXKÜLL & STOLBERG
(86) International application number: PCT/IB2007/002554
(87) International publication number: WO 2009/027760

(56) References cited:
- EP-A2- 1 375 244
- EP-A2- 1 375 244
- WO-A1-03/057526
- WO-A1-03/057526

## Description

The present invention relates to a vehicle seat, in particular a backseat, comprising a head restraint mounted on the backrest of the vehicle seat, wherein the head restraint comprises a mechanism for folding the head restraint between at least one fixed operative position and at least one stowage position, wherein the vehicle seat further comprises an anti-whiplash system including a release mechanism associated with the head restraint, which release mechanism is adapted to, when the head restraint is in an operative position, reduce the gap between an occupant's head and the head restraint in case of an accident.

The mechanism for folding the head restraint from an operative position to a storage position allows to fold down the head restraint so that the folded head restraint uses more efficiently the available space in the vehicle.

It is important for the safety in vehicles to reduce the Neck-Injury-Criterion level in case of a rear-end impact accident. Rear-end collisions are rarely fatal, but they give rise to fully one quarter of all personal injuries, often with permanent impairment, and to extended sick-leave and inability to work. In addition to the human suffering, these injuries account in many countries for more than 50% of all insurance claims and costs for societies for personal injuries sustained by car occupants.

These whiplash injuries have been linked to a too large gap between the head restraint of the vehicle seat and an occupant's head. In case of a rear-end collision the occupant's body is accelerated forward whereas the head of the occupant accelerates in the gap backwards relative to the vehicle by virtue of its inertia. Thus, the closer the gap is the less the head is dangerously accelerated backwards relative to the vehicle.

A further requirement for head restraints in backseats is that the head restraints of a backseat should be able to move into an inoperable stowage position to increase the available loading capacity of the vehicle and/or to improve the driver's sight rearwards. Such head restraints that can be pivoted into an inoperable position are known from US 6,375,264 B1 or US 2005/0179301 A1.

Head restraint systems reducing the gap between the head restraint of the vehicle seat and an occupant's head in case of an accident are for example known from WO 2005/087536 al, US 6, 830, 278 B2 or EP 1 526 982 B1. Such head restraint systems are denoted as active head restraints.

WO 03/057526 A1 discloses a headrest comprising a protective cushion which is pivotally connected to a head rest attachment and can be folded to a space saving position. The head rest attachment is intended to be mounted on top of a backrest of a vehicle.

EP 1 375 244 A2 discloses a vehicle seat comprising the features of the preamble of claim 1. For reducing the gap in case of an accident, a moveable part is pivoted closer to the head of the occupant by a spring biased actuating lever acting on the moveable part at an end portion thereof spaced apart from the pivotal mounting. With such mechanism it cannot be ensured that the moveable part of the head restraint is safely held in its position extended closer to the head of the occupant because the final position of the actuating lever cannot precisely be predicted; if the actuating lever does not reach a position in which it is perpendicular to the moveable part, a force acting in perpendicular direction on the moveable part will fold the actuating lever away again, causing the moveable part of the head restraint to be moved away from its extended position again.

It is an object of the present invention to provide more safety for a vehicle seat by arranging a head restraint such that the head restraint is safely maintained in its extended position closer to the head of the occupant once moved there in case of an accident.

This object is achieved according to the present invention by the features of claim 1. Preferred embodiments of the invention are subject of the dependent claims.

According to the present invention a vehicle seat, in particular a backseat, is provided comprising a head restraint mounted on the backrest of the vehicle seat, wherein the head restraint comprises a mechanism for folding the head restraint between at least one fixed operative position and at least one stowage position, wherein the vehicle seat further comprises an anti-whiplash system including a release mechanism associated with the head restraint, which release mechanism is adapted to, when the head restraint is in an operative position, reduce the gap between an occupant's head and the head restraint in case of an accident, characterized in that the release mechanism comprises a movable part and a stationary part, wherein a clearance between the movable part and the stationary part opens up when the release mechanism is released, the release mechanism further comprises a wedging body having a small width portion and a large width portion and an intermediate increasing width portion, wherein the wedging body points with its small width portion towards the clearance between the movable part and the stationary part, and in that the wedging body is movable and preloaded to move into the clearance as it opens up to thereby abut against the movable part and against the stationary part in order to prevent the movable part of the head restraint from moving back.

The term "stationary part" as used herein refers to one or more parts of the head restraint which do not move, when the head restraint is in a fixed operative position and thus do not move during a release action of the whiplash system. Nevertheless, the "stationary part" of the head restraint or parts of it may be movable when the head restraint is not in a fixed operative position. The folding action of the head restraint comprises moving from at least one stowage to at least one fixed operative position of the head restraint, and vice versa. In an operative position of the head restraint the stationary part is immovable with respect to the backseat.

The vehicle seat may comprise a preassembled head restraint mounting unit that is mounted in the backrest of the vehicle seat and wherein said preassembled head restraint mounting unit comprises both the mechanism for folding the head restraint and the anti-whiplash system.

The preassembled head restraint mounting unit may be mounted in the backrest of the vehicle seat, preferably at the top of the backrest. The head restraint body may be mounted to the preassembled head restraint mounting unit by two carrier bars. The stowage mechanism can be arranged to pivot the carrier bars forward or backward and thereby pivoting the head restraint to an inoperable stowage position, preferable at an angle approximately 90° in relation to the operative position. The anti-whiplash system may be arranged to 'lift' and pivot the movable part of the preassembled head restraint mounting unit forward.

Both the stowage and the anti-whiplash system may be preloaded by springs biasing the head restraint to a folded/crash position respectively. The stowage mechanism can be held in a operative position by a locking mechanism, the latter holding the spring in position. The locking mechanism may be arranged to be intentionally released, e.g. by a button or remote control. Preferably, the whiplash protection mechanism is held in an operative position by a locking mechanism, holding the spring in position, the locking mechanism being released in the event of a crash. The locking mechanism may be released by an actuator, the actuator can be pyrotechnic, electromagnetic, mechanical (e.g. occupant body impact actuated), pneumatic etc. The actuator is influenced by a crash sensor, i.e. the locking mechanism is released when a crash has occurred.

Both the mechanism for folding the head restraint and the anti-whiplash system may be placed in the head restraint of the vehicle seat.

The head restraint is very easily replaceable. The stowage mechanism may include a button for intentional release of a locking mechanism to fold the head restraint in relation to the carrier bars, the latter being preferably axially displaceably, but not pivotably attached to the backrest. The anti-whiplash system is also arranged within the head restraint, wherein the anti-whiplash system is able to move the head-engaging member of the head restraint of the body forward to close the gap between the occupants head and the head-engaging member in the event of a crash. Preferably, the anti-whiplash system is released by an actuator under influence of a crash sensor.

The vehicle seat may comprise a preassembled head restraint mounting unit that is mounted in the backrest of the vehicle seat and wherein said preassembled head restraint mounting unit comprises the mechanism for folding the head restraint, whereas the anti-whiplash system is placed in the head restraint of the vehicle seat.

Some vehicles are equipped with pre-crash warning systems, able to predict an upcoming crash. In such vehicles the anti-whiplash system may be released before the crash has actually occurred, i.e. a pre-crash release. A pre-crash release is applicable on any preferred embodiment.

Preferably, the movable wedging body is preloaded by a spring. More preferably, the movable wedging body is urged to gradually rotate into the clearance when the release mechanism is released in order to prevent the movable part of the head' restraint from moving back. Thereby, the wedging body gradually fills the clearance as it opens up between the movable part and the stationary part of the release mechanism and abuts against the movable part and against the stationary part.

Preferably, the movable wedging body is an essentially wedge-shaped body. The essentially wedge-shaped body may comprise a sloped surface creating an increased thickness of the body from the small width portion via the intermediate increasing width portion to the large width portion. The wedge-shaped body may be oriented with its apex or small width portion towards the clearance and may slide into the clearance as it opens up.

More preferably, the wedging body is rotatable and comprises a helically shaped surface portion winding up from the small width portion via the intermediate increasing width portion to the large width portion. The wedging body may essentially have the shape of a disc segment that is rotatable about its central axis. The disc segment may comprise one surface having essentially the shape of a circle segment that winds up from the small width portion via the intermediate increasing width portion to the large width portion following a helix. Alternatively, the wedging body may have the shape of a segment of a ring, the ring having an annular surface winding up from the small width portion via the intermediate increasing width portion to the large width portion.

The release mechanism may be arranged to pivot the head restraint forward with respect to the backrest of the vehicle seat such that an angular-shaped clearance between the movable part and the stationary part opens up near the pivot axis when the release mechanism is deployed and the movable wedging body is urged to move into the angular-shaped clearance.

Furthermore, the head restraint may be connected rotatably about a folding axis parallel to the pivot axis with the stationary part for folding of the head restraint to a stowage position. The folding action in this embodiment includes a forward rotation of the head restraint about a folding axis. This is advantageous as the distance between a backseat and a frontseat is often too small to allow for folding a backrest with a head restraint in an operative position down to a flat position in order to increase the loading capacity in the back of the vehicle. In such a case the head restraint in an operative position hits on the backrest of the frontseat during a folding action of the backrest of the backseat. When the head restraint is folded forward into a stowage position, it is then possible to fold the backseat to a flat position without hitting the backrest of the frontseat and to allow for the head restraint to cache in the footwell of the backseat when the backrest is folded forward.

The movable part may comprise a head engaging member and at least one rotatable cam attached to the head engaging member. The rotatable cam is also rotatably attached to the stationary part, such that the gap between the head engaging member and the stationary part is increased upon rotation of the cam. The cam comprises an extension such that the extension follows a circular path away from the stationary part when the cam rotates, such that the clearance opens up between the extension of the cam and the stationary part. The movable wedging body is preloaded to move into the clearance as it opens up to thereby abut against the extension of the cam and against the stationary part in order to prevent the movable part of the head restraint from moving back.

In addition, the stationary part may be connected rotatably about a folding axis with the carrier bars for folding of the head restraint to a stowage position. This has the same advantages as already outlined for the first embodiment of the invention.

The stationary part of the head restraint of the vehicle seat may be connected rotatably about a folding axis with the backrest of the vehicle seat for folding of the head restraint to a stowage position. This embodiment exhibits features of the first and the second above-mentioned embodiments. A head-engaging member is connected to the stationary part which is mounted rotatably about a folding axis on a preassembled head restraint mounting unit. The preassembled head restraint mounting unit itself is mounted in backrest of the vehicle seat. The head-engaging member is connected to rotatable cams such that the gap between an occupant's head and the head-engaging member is reduced upon a concerted rotation of the cams about a transversal axis (transversal is meant herein to describe a direction across the vehicle, perpendicular to the longitudinal axis of the vehicle and parallel to the plane of driving of the vehicle, whereas the longitudinal axis is also parallel to the driving plane and coinciding with the direction of (straight) driving). The head-engaging member and the cams establish the movable part of the anti-whiplash system.

Preferably, in any embodiment of the invention the release mechanism may comprise a returning mechanism for returning the head restraint into its initial position after the release mechanism has been released, wherein the returning mechanism comprises means for returning the movable wedging body back into its initial preloaded position. The returning mechanism can for example be deployed by pressing a button or turning a rotary handle.

It should be understood that apart from the embodiments described herein other configurations of the inventive anti-whiplash system are possible.

In the following, preferred embodiments of the invention are described in detail with references to the accompanying figures 1 to 23, where the figures 1 to 10 refer to a first embodiment of the invention, the figures 11 to 21 refer to a second embodiment of the invention and the figures 22 and 23 refer to a third embodiment of the invention.

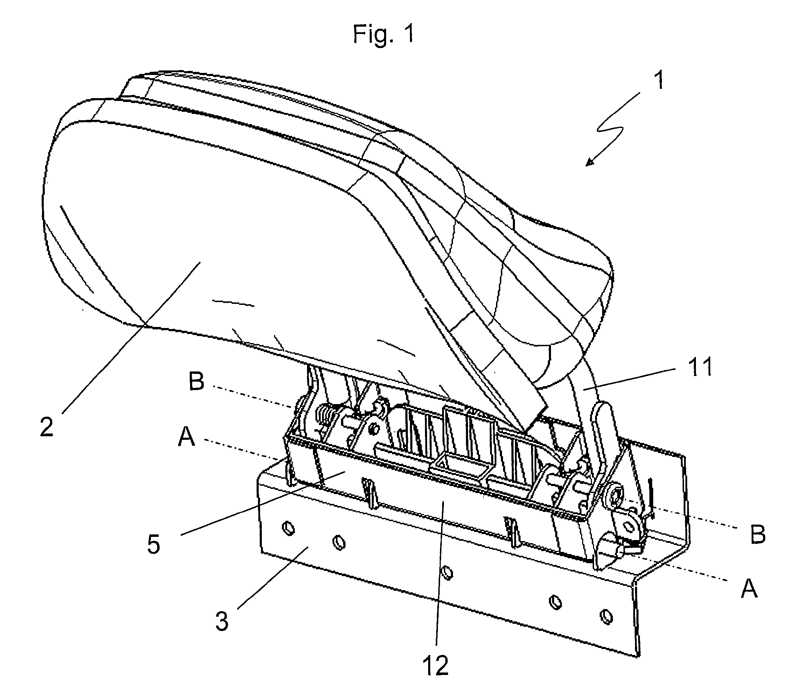

Figure 1 shows a perspective view of a stowable head restraint in an operative position provided with an anti-whiplash system in an activated state.

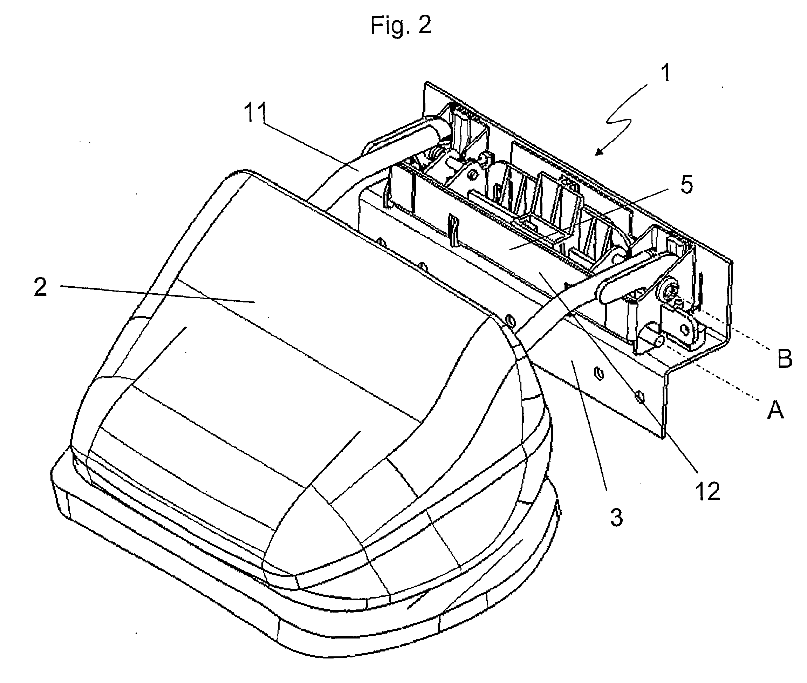

Figure 2 shows a perspective view of a stowable head restraint stowed away in an inoperable position provided with an anti-whiplash system in an initial state.

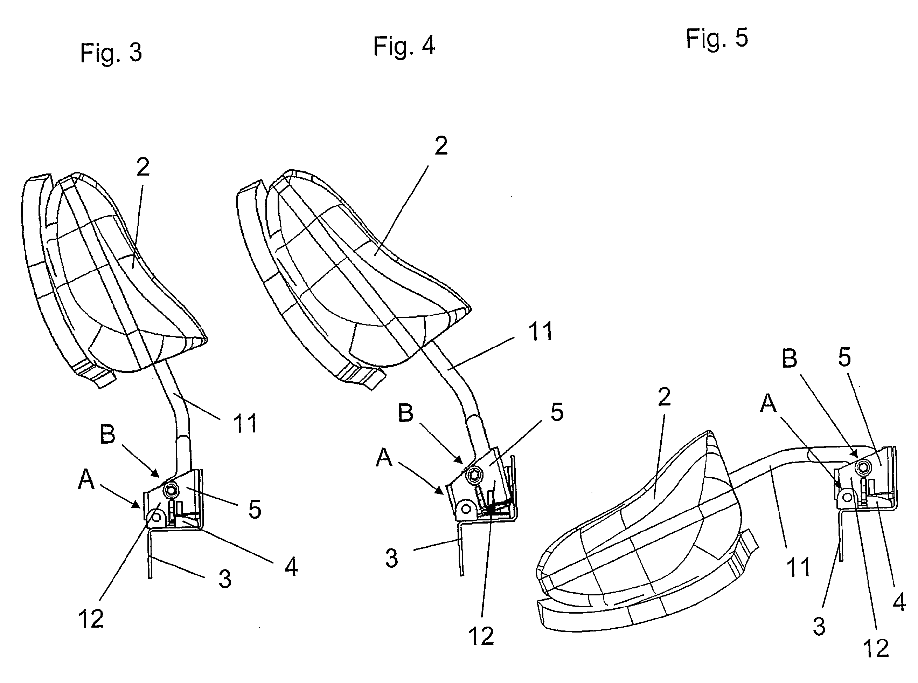

Figure 3 shows a side view of a stowable head restraint in an operative position provided with an anti-whiplash system in an initial state.
Figure 4 shows a side view of a stowable head restraint in an operative position provided with an anti-whiplash system in an activated state.
Figure 5 shows a side view of a stowable head restraint stowed away in an inoperable position provided with an anti-whiplash system in an initial state.

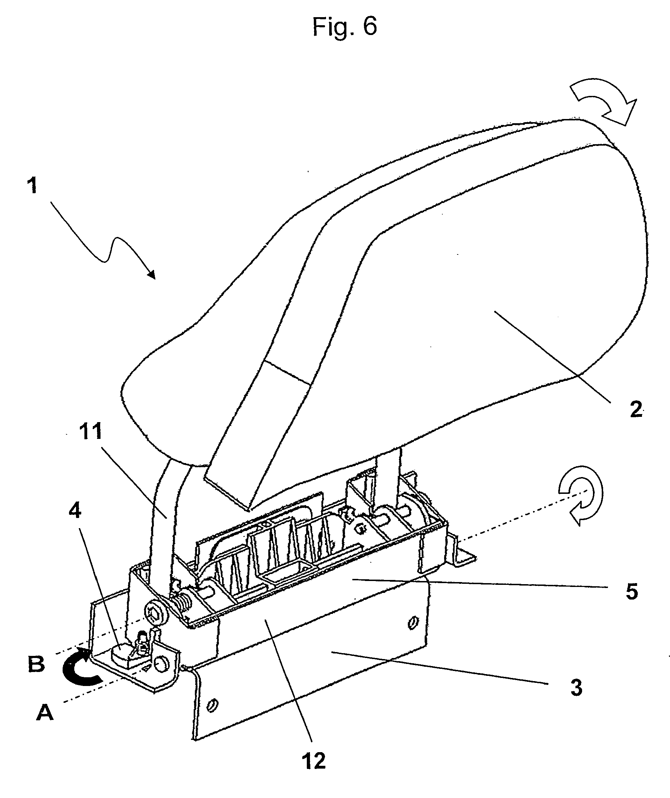

Figure 6 shows a perspective view of a stowable head restraint in an operative position provided with an anti-whiplash system in an initial state.

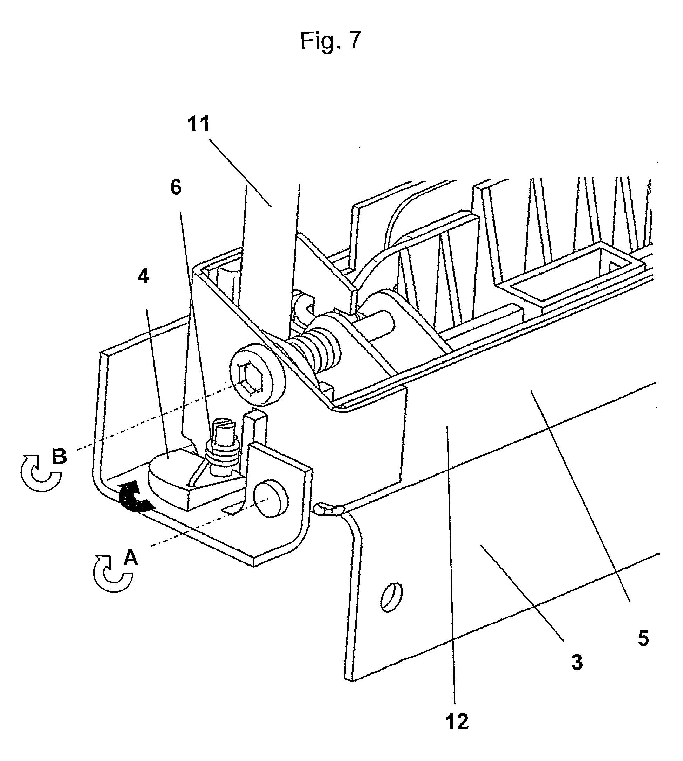

Figure 7 shows a detailed perspective view of the anti-whiplash system in an initial state.

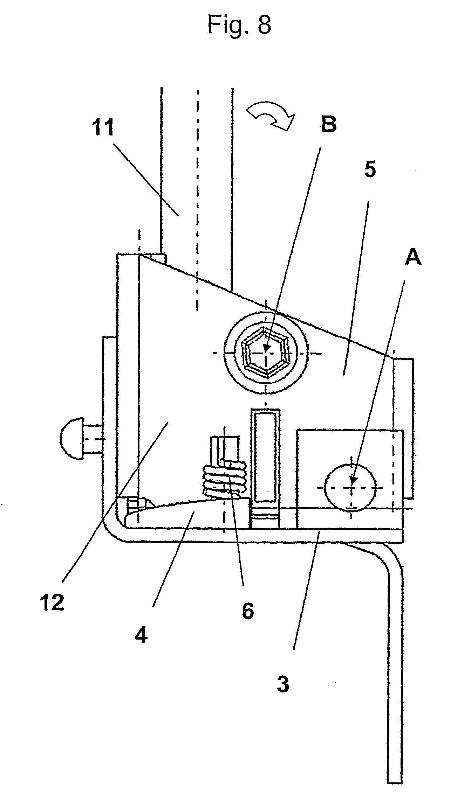

Figure 8 shows a detailed side view of the anti-whiplash system in an initial state.

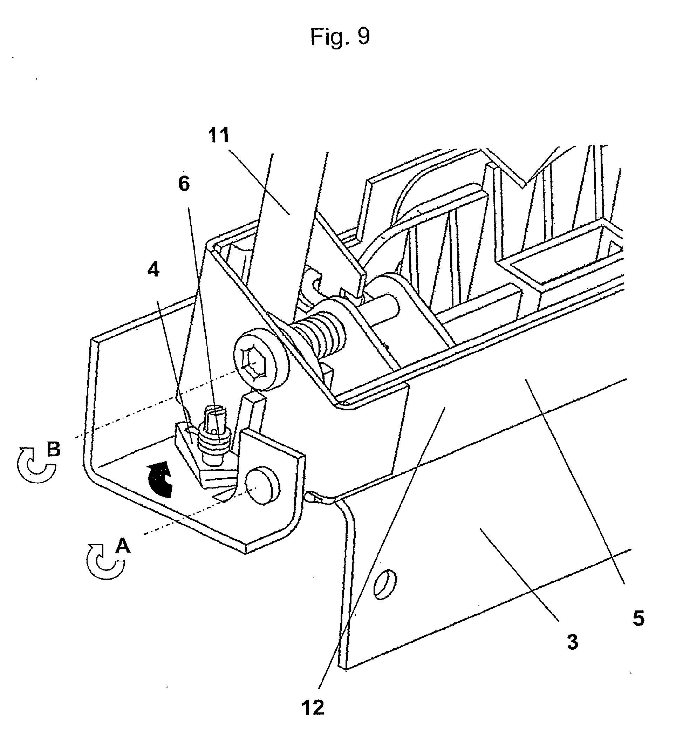

Figure 9 shows a detailed perspective view of the anti-whiplash system in an activated state.

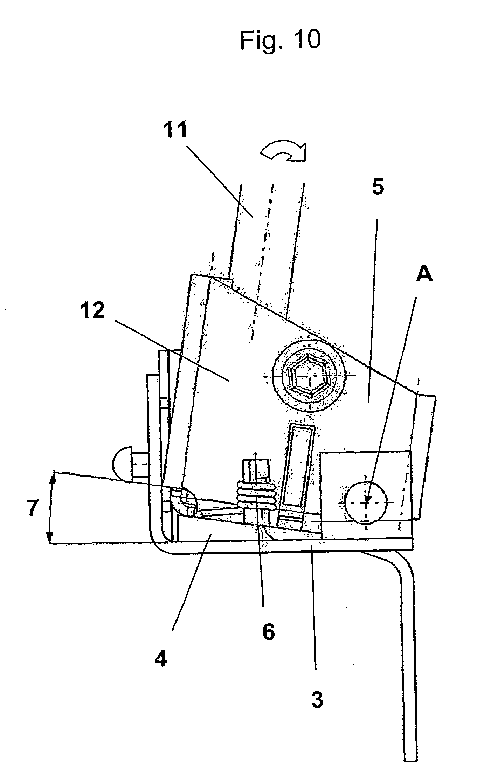

Figure 10 shows a detailed side view of the anti-whiplash system in an activated state.

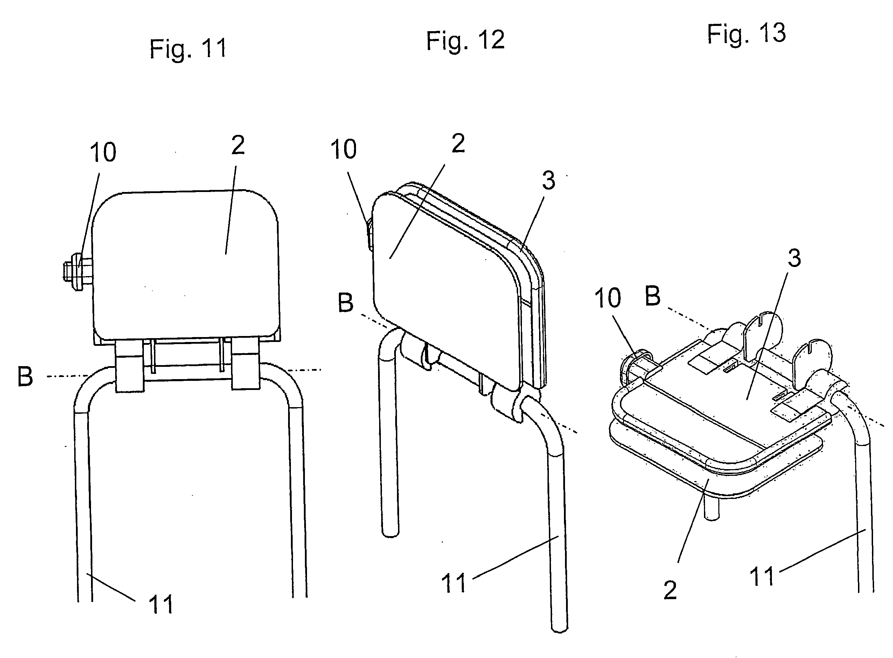

Figure 11 shows a front view of a stowable head restraint in an operative position provided with an anti-whiplash system in an initial state.
Figure 12 shows a perspective view of a stowable head restraint in an operative position provided with an anti-whiplash system in an initial state.
Figure 13 shows a perspective view of a stowable head restraint stowed away in an inoperable position provided with an anti-whiplash system in an initial state.

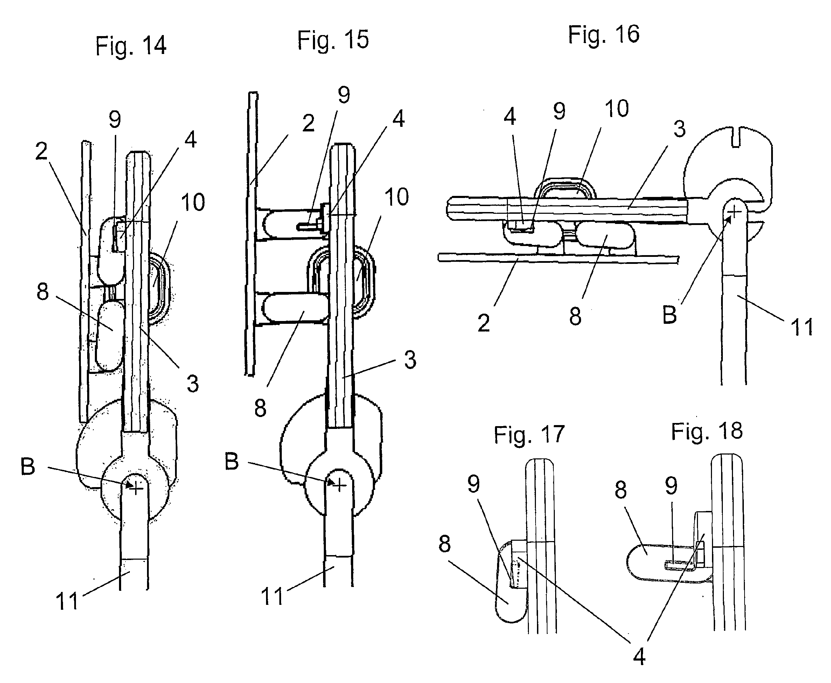

Figure 14 shows a side view of a stowable head restraint in an operative position provided with an anti-whiplash system in an initial state.
Figure 15 shows a side view of a stowable head restraint in an operative position provided with an anti-whiplash system in an activated state.
Figure 16 shows a side view of a stowable head restraint stowed away in an inoperable position provided with an anti-whiplash system in an initial state.
Figure 17 shows a detailed side view of a stowable head restraint provided with an anti-whiplash system in an initial state.
Figure 18 shows a detailed side view of a stowable head restraint provided with an anti-whiplash system in an activated state.

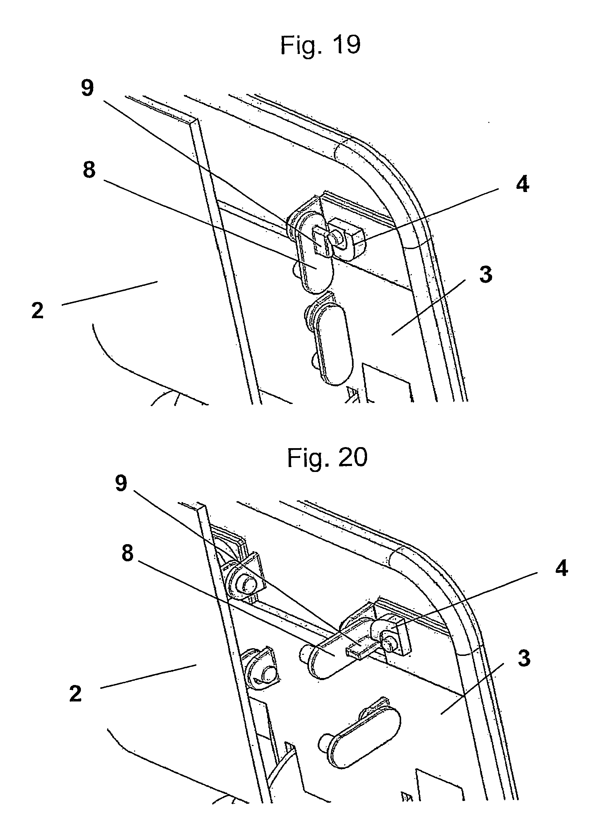

Figure 19 shows a detailed perspective view of the anti-whiplash system in an initial state.
Figure 20 shows a detailed perspective view of the anti-whiplash system in an activated state.

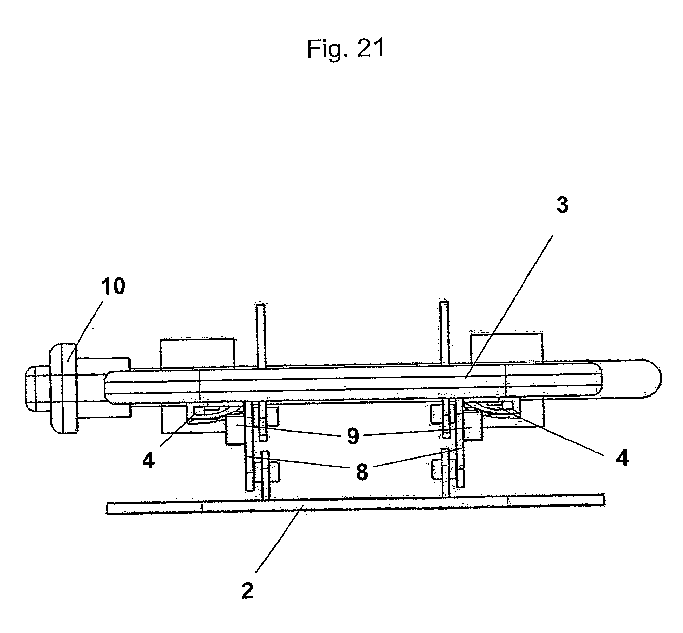

Figure 21 shows a top view of the anti-whiplash system in an activated state.

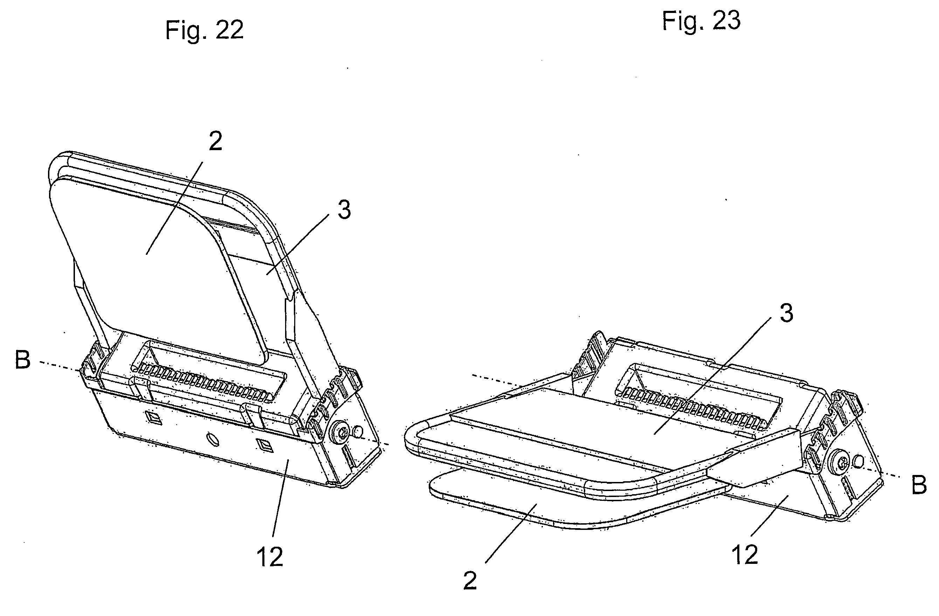

Figure 22 shows a perspective view of a stowable head restraint in an operative position provided with an anti-whiplash system in an initial state.
Figure 23 shows a perspective view of a stowable head restraint stowed away in an inoperable position provided with an anti-whiplash system in an initial state.

The active head restraint 1 shown in figures 1 to 10 comprises a release mechanism for reducing the gap between an occupant's head and the head restraint 1 in case of an accident. The head-engaging member 2 is mounted on carrier bars 11 that are connected to a preassembled head restraint mounting unit 12 which is mounted in the backrest of the vehicle seat (not shown). The anti-whiplash system comprises essentially a movable part 5 and a stationary part 3. The stationary part 3 is mounted on the backrest of a vehicle seat (not shown). The movable part 5 is connected pivotably about a transversal axis A to the stationary part 3. Upon activation of the anti-whiplash system the movable part 5 pivots forward and moves the attached head-engaging member 2 essentially towards an occupant's head (not shown) such that the gap between the head restraint and an occupant's head is reduced. At one or both lateral sides of the preassembled head restraint mounting unit 12 there is a wedging body 4 connected rotatably about a vertical axis to the stationary part 3 of the anti-whiplash system. By means of a spring 6 the wedging body 4 is preloaded and abuts with its small width portion against the movable part 5 adjacent to the clearance between the movable part 5 and the stationary part 3 that opens up upon a forward pivot movement of the movable part 5 about the cross-vehicle axis A during an activation process. Figures 1 and 4 show the anti-whiplash system in an activated state.

Furthermore, the head restraint 1 can be stowed away by a pivot movement of the head-engaging member 2 about a transversal axis B parallel to axis A. The head-engaging member 2 is connected pivotably about the transversal axis B to the movable part 5 via carrier bars 11. Figures 2 and 5 show the head restraint stowed away in an inoperable stowage position after a pivot movement of the head-engaging member 2 about the transversal axis B.

Figures 9 and 10 show the active head restraint 1 in an activated state where the gap between an occupant's head and the head restraint 1 is reduced by a forward pivot movement of the movable part 5 about the cross-vehicle axis A. Upon such a forward pivot movement a clearance in form of an angle 7 opens up. The clearance may be filled gradually by the rotatable and preloaded wedging body 4 that rotates about a vertical axis into the clearance and prevents the movable part 5 of the head restraint 1 from moving back.

A second embodiment of the invention is shown in figures 11 to 21. In this embodiment the head-engaging member 2 is connected to at least one rotatable cam 8 such that the gap between an occupant's head and the head-engaging member 2 is reduced upon a concerted rotation of the cam 8 about a transversal axis. The preloaded movable wedging body 4 is urged to move into a clearance that opens up upon rotation of the cam 8 in order to prevent the cams 8 from rotating back. The cam 8 comprises an extension 9 provided on the surface of the cam 8 such that the extension 9 follows a circular path away from the stationary part 3 when the cam 8 rotates about a transversal axis A upon actuation of the anti-whiplash system. The clearance may open up between the extension 9 on the cam 8 and the stationary part 3 of the release mechanism. As can be seen in Figures 6 to 12 the wedging body 4 is connected rotatably about an longitudinal axis to the stationary part 3. By means of a spring the wedging body 4 is preloaded and abuts with its small width portion against the extension 9 of the cam 8. The clearance between the extension 9 of the cam 8 and the stationary part 3 opens up upon a rotation of the cam 8 about a transversal axis A during an activation process. As soon as the clearance is large enough to engage the small width portion of the wedging body 4 the wedging body 4 rotates about a longitudinal axis such that it fills the clearance and prevents the cam 8 from moving back. When the cam 8 has reached the activated position as shown in figures 7, 9, 11 and 12 the clearance is maximally opened up and the wedging body 4 has reached its final blocking position.

In figures 13 and 16 the vehicle seat's head restraint according to the second embodiment of the invention is shown in a stowage position. The stationary part 3 is connected rotatably about a folding axis B with the carrier bars 11 for folding of the head restraint 1 to an inoperable stowage position.

A third embodiment of the invention is shown in figures 22 and 23. This embodiment exhibits features of the first and the second above-mentioned embodiments. The head-engaging member 2 is connected to the stationary part 3 which is mounted rotatably about a folding axis B on a preassembled head restraint mounting unit 12. The preassembled head restraint mounting unit 12 itself is mounted in the backrest of the vehicle seat (not shown). The head-engaging member 2 is connected to rotatable cams 8 such that the gap between an occupant's head and the head-engaging member 2 is reduced upon a concerted rotation of the cams 8 about an transversal axis. The head-engaging member 2 and the cams 8 establish the movable part 5 of the anti-whiplash system. The head restraint 1 can be stowed away by a pivot movement of the stationary part 3 about a transversal axis B parallel to axis A.

## Claims

1. Vehicle seat, in particular a backseat, comprising a head restraint (1) mounted on the backrest of the vehicle seat, wherein the head restraint (1) comprises a mechanism for folding the head restraint between at least one fixed operative position and at least one stowage position, wherein the vehicle seat further comprises an anti-whiplash system including a release mechanism associated with the head restraint (1), which release mechanism is adapted to, when the head restraint (1) is in an operative position, reduce the gap between an occupant's head and the head restraint (1) in case of an accident, **characterized in that**
said release mechanism comprises a movable part (5) and a stationary part (3), wherein a clearance between the movable part (5) and the stationary part (3) opens up when the release mechanism is released, the release mechanism further comprises a wedging body (4) having a small width portion and a large width portion and an intermediate increasing width portion, wherein the wedging body (4) points with its small width portion towards the clearance between the movable part (5) and the stationary part (3), and **in that** the wedging body (4) is movable and preloaded to move into the clearance as it opens up to thereby abut against the movable part (5) and against the stationary part (3) in order to prevent the movable part (5) of the head restraint (1) from moving back.

2. Vehicle seat according to claim 1, wherein the vehicle seat comprises a preassembled head restraint mounting unit (12) that is mounted in the backrest of the vehicle seat and wherein said preassembled head restraint mounting unit (12) comprises both the mechanism for folding the head restraint (1) and the anti-whiplash system.

3. Vehicle seat according to claim 1, wherein both the mechanism for folding the head restraint (1) and the anti-whiplash system are placed in the head restraint (1) of the vehicle seat.

4. Vehicle seat according to claim 1, wherein the vehicle seat comprises a preassembled head restraint mounting unit (12) that is mounted in the backrest of the vehicle seat and wherein said preassembled head restraint mounting unit (12) comprises the mechanism for folding the head restraint (1), whereas the anti-whiplash system is placed in the head restraint (1) of the vehicle seat.

5. Vehicle seat according to claim 1, wherein the wedging body (4) is preloaded by a spring (6).

6. Vehicle seat according to claim 1 or 5, wherein the wedging body (4) is an essentially wedge-shaped body.

7. Vehicle seat according to any one of the claims 1, 5 or 6, wherein the wedging body (4) is rotatable and comprises a helically shaped surface portion winding up from the small width portion via the intermediate increasing width portion to the large width portion.

8. Vehicle seat according to claim 7, wherein the wedging body (4) is urged to gradually rotate into the clearance when the release mechanism is released in order to prevent the movable part (5) of the head restraint (1) from moving back.

9. Vehicle seat according to the claim 2 or any one of claims 5 to 8 when dependent on claim 2, wherein the release mechanism is arranged to pivot the movable part (5) of the head restraint (1) forward with respect to the backrest of the vehicle seat such that an angular-shaped clearance (7) between the movable part (5) and the stationary part (3) opens up near the pivot axis (A) when the release mechanism is deployed and the movable wedging body (4) is urged to move into the angular-shaped clearance (7).

10. Vehicle seat according to the claims 2 and 9, wherein the head restraint (1) is connected rotatably about a folding axis (B) parallel to the pivot axis (A) with the stationary part (3) for folding of the head restraint (1) to a stowage position.

11. Vehicle seat according to the claim 3, wherein the movable part (5) comprises a head engaging member (2) and at least one rotatable cam (8) attached to the head engaging member (2), wherein the rotatable cam (8) is also rotatably attached to the stationary part (3), such that the gap between the head engaging member (2) and the stationary part (3) is increased upon rotation of the cam (8), wherein the cam (8) comprises an extension (9) such that the extension (9) follows a circular path away from the stationary part (3) when the cam (8) rotates, such that the clearance opens up between the extension (9) of the cam (8) and the stationary part (3), and wherein the movable wedging body (4) is preloaded to move into the clearance as it opens up to thereby abut against the extension (9) of the cam (8) and against the stationary part (3) in order to prevent the movable part (5) of the head restraint from moving back.

12. Vehicle seat according to claim 11, wherein the stationary part (3) is connected rotatably about a folding axis (B) with the carrier bars (11) for folding of the head restraint (1) to a stowage position.

13. Vehicle seat according to claims 4 and 11, wherein the stationary part (3) is connected rotatably about a folding axis (B) with the backrest of the vehicle seat for folding of the head restraint (1) to a stowage position.

14. Vehicle seat according to any one of the claims 1 to 13, wherein the release mechanism comprises a returning mechanism (10) for returning the head restraint into its initial position after the release mechanism has been released, wherein the returning mechanism comprises means for returning the movable wedging body back into its initial preloaded position.

## Patentansprüche

1. Fahrzeugsitz, insbesondere Rücksitz, mit einer an der Rückenlehne des Fahrzeugsitzes angebrachten Kopfstütze, wobei die Kopfstütze (1) einen Mechanismus aufweist, um die Kopfstütze wenigstens zwischen einer festen Betriebsstellung und wenigstens einer verstauten Stellung zu schwenken, wobei der Fahrzeugsitz weiter ein Anti-Schleudertrauma-System mit einem der Kopfstütze (1) zugeordneten Auslösemechanismus aufweist, wobei der Auslösemechanismus dazu ausgestaltet ist, den Abstand zwischen dem Kopf eines Fahrgastes und der Kopfstütze (1) im Fall eines Unfalls zu reduzieren, wenn sich die Kopfstütze (1) in der Betriebsstellung befindet, **dadurch gekennzeichnet, dass**
der Auslösemechanismus ein bewegliches Teil (5) und ein ortsfestes Teil (3) aufweist, wobei sich ein Freiraum zwischen dem beweglichen Teil (5) und dem ortsfesten Teil (3) vergrößert, wenn der Auslösemechanismus ausgelöst wird, wobei der Auslösemechanismus weiter einen Keilkörper (4) mit einem Bereich geringer Breite und einem Bereich großer Breite und einem dazwischen liegenden Bereich wachsender Breite aufweist, wobei der Keilkörper (4) mit seinem Bereich kleiner Breite in Richtung auf den Freiraum zwischen dem beweglichen Teil (5) und dem ortsfesten Teil (3) zu gerichtet ist, und dass der Keilkörper (4) beweglich ist und dazu vorgespannt ist, um in den Freiraum bewegt zu werden, soweit dieser sich öffnet, um dadurch an dem beweglichen Teil (5) und an dem ortsfesten Teil (3) anzuliegen, um zu verhindern, dass das bewegliche Teil (5) der Kopfstütze (1) sich wieder zurückbewegt.

2. Fahrzeugsitz nach Anspruch 1, wobei der Fahrzeugsitz eine vorab zusammengesetzte Kopfstützenmontageeinheit (12) aufweist, die an der Rückenlehne des Fahrzeugsitzes angebracht ist, und wobei die vorab zusammengesetzte Kopfstützenmontageeinheit (12) sowohl den Mechanismus zum Schwenken der Kopfstütze (1) als auch das Anti-Schleudertrauma-System aufweist.

3. Fahrzeugsitz nach Anspruch 1, wobei sowohl der Mechanismus zum Schwenken der Kopfstütze (1) als auch das Anti-Schleudertrauma-System in der Kopfstütze (1) des Fahrzeugsitzes platziert sind.

4. Fahrzeugsitz nach Anspruch 1, wobei der Fahrzeugsitz eine vorab zusammengesetzte Kopfstützenmontageeinheit (12) aufweist, die in der Rücklehne des Fahrzeugsitzes angebracht ist, und wobei die vorab zusammengesetzte Kopfstützenmontageeinheit (12) den Mechanismus zum Schwenken der Kopfstütze (1) enthält, während das Anti-Schleudertrauma-System in der Kopfstütze (1) des Fahrzeugsitzes platziert ist.

5. Fahrzeugsitz nach Anspruch 1, wobei der Keilkörper (4) durch eine Feder (6) vorgespannt ist.

6. Fahrzeugsitz nach Anspruch 1 oder 5, wobei der Keilkörper (4) ein im Wesentlichen keilförmiger Körper ist.

7. Fahrzeugsitz nach einem der Ansprüche 1, 5 oder 6, wobei der Keilkörper (4) drehbar ist und einen helixförmigen Oberflächenbereich hat, der von dem Bereich kleiner Breite über den dazwischen liegenden Bereich ansteigender Breite zu dem Bereich mit großer Breite ansteigt.

8. Fahrzeugsitz nach Anspruch 7, wobei der Keilkörper (4) dazu angetrieben wird, sich fortschreitend in den Freiraum zu drehen, wenn der Auslösemechanismus ausgelöst ist, um zu verhindern, dass das bewegliche Teil (5) der Kopfstütze (1) sich wieder zurückbewegt.

9. Fahrzeugsitz nach Anspruch 2 oder einem der Ansprüche 5 bis 8, wenn abhängig von Anspruch 2, wobei der Auslösemechanismus dazu ausgestaltet ist, um das bewegliche Teil (5) der Kopfstütze (1) nach vorne in Bezug auf die Rückenlehne des Fahrzeugsitzes so zu schwenken, dass sich ein winkelförmiger Freiraum (7) zwischen dem beweglichen Teil (5) und dem ortsfesten Teil (3) nahe der Schwenkachse (A) öffnet, wenn der Auslösemechanismus ausgelöst wird, und der Keilkörper (4) dazu angetrieben wird, um sich in den winkelförmigen Freiraum (7) zu bewegen.

10. Fahrzeugsitz nach den Ansprüchen 2 und 9, wobei die Kopfstütze (1) drehbar um eine Verstauachse (B) parallel zu der Schwenkachse (A) mit dem ortsfesten Teil (3) verbunden ist, um die Kopfstütze (1) in eine Verstaustellung zu bewegen.

11. Fahrzeugsitz nach Anspruch 3, wobei das bewegliche Teil (5) ein Kopfanlageteil (2) und wenigstens einen drehbaren Nocken (8) aufweist, der an dem Kopfanlageteil (2) befestigt ist, wobei der drehbare Nocken (8) auch drehbar an dem ortsfesten Teil (3) angebracht ist, so dass die Lücke zwischen dem Kopfanlageteil (2) und dem ortsfesten Teil (3) bei Drehung des Nockens (8) vergrößert wird, wobei der Nocken (8) einen Fortsatz (9) aufweist, so dass der Fortsatz (9) einem kreisförmigen Weg weg von dem ortsfesten Teil (3) folgt, wenn sich der Nocken (8) dreht, so dass sich der Freiraum zwischen dem Fortsatz (9) des Nockens (8) und dem ortsfesten Teil (3) öffnet, und wobei der bewegliche Keilkörper (4) dazu vorgespannt ist, um sich in den Freiraum zu bewegen, soweit sich dieser öffnet, um dadurch an dem Fortsatz (9) des Nockens (8) und an dem ortsfesten Teil (3) anzuliegen, um zu verhindern, dass das bewegliche Teil (5) der Kopfstütze sich wieder zurückbewegt.

12. Fahrzeugsitz nach Anspruch 11, wobei das ortsfeste Teil (3) drehbar um eine Verstauachse (B) mit den Trägerstangen (11) verbunden ist, um die Kopfstütze (1) in eine Verstaustellung zu schwenken.

13. Fahrzeugsitz nach Ansprüchen 4 und 11, wobei das ortsfeste Teil (3) drehbar um eine Verstauachse (B) mit der Rückenlehne des Fahrzeugsitzes verbunden ist, um die Kopfstütze (1) in eine Verstaustellung zu schwenken.

14. Fahrzeugsitz nach einem der Ansprüche 1 bis 13, wobei der Auslösemechanismus einen Rückkehrmechanismus (10) aufweist, um die Kopfstütze in ihre Ausgangsposition zurückzubewegen, nachdem der Auslösemechanismus ausgelöst worden ist, wobei der Rückkehrmechanismus Einrichtungen aufweist, um den beweglichen Keilkörper zurück in seine vorgespannte Ausgangsstellung zu bewegen.

## Revendications

1. Siège de véhicule, plus précisément siège arrière, comprenant un repose-tête (1) monté sur le dossier du siège de véhicule, dans lequel le repose-tête (1) comprend un mécanisme servant à replier le repose-tête entre au moins une position fonctionnelle fixe et au moins une position rangée, dans lequel le siège de véhicule comprend en outre un système anti-coup du lapin incluant un mécanisme de libération associé au repose-tête (1), lequel mécanisme de libération est apte, lorsque le repose-tête (1) est dans une position fonctionnelle, à réduire l'espace entre la tête d'un occupant et le repose-tête (1) dans le cas d'un accident, **caractérisé en ce que**
ledit mécanisme de libération comprend une partie mobile (5) et une partie immobile (3), dans lequel un dégagement s'ouvre entre la partie mobile (5) et la partie immobile (3) lors de la libération du mécanisme de libération, le mécanisme de libération comprend en outre un corps de calage (4) présentant une partie de petite largeur et une partie de grande largeur et une partie intermédiaire de largeur allant en augmentant, dans lequel le corps de calage (4) est orienté de sorte que sa partie de petite largeur pointe en direction du dégagement séparant la partie mobile (5) et la partie immobile (3), et **en ce que** le corps de calage (4) est mobile et précontraint pour venir dans le dégagement lors de son ouverture pour ainsi buter contre la partie mobile (5) et contre la partie immobile (3) afin d'empêcher un déplacement de retour de la partie mobile (5) du repose-tête (1).

2. Siège de véhicule selon la revendication 1, dans lequel le siège de véhicule comprend un module de montage de repose-tête pré-assemblé (12) qui est monté dans le dossier du siège de véhicule et dans lequel ledit module de montage de repose-tête pré-assemblé (12) comprend à la fois le mécanisme de repli du repose tête (1) et le système anti-coup du lapin.

3. Siège de véhicule selon la revendication 1, dans lequel le mécanisme de repli du repose-tête (1) et le système anti-coup du lapin sont placés tous les deux dans le repose-tête (1) du siège de véhicule.

4. Siège de véhicule selon la revendication 1, dans lequel le siège de véhicule comprend un module de montage de repose-tête pré-assemblé (12) qui est monté dans le dossier du siège de véhicule et dans lequel ledit module de montage de repose-tête pré-assemblé (12) comprend le mécanisme de repli du repose-tête (1), tandis que le système anti-coup du lapin est placé dans le repose-tête (1) du siège de véhicule.

5. Siège de véhicule selon la revendication 1, dans lequel le corps de calage (4) est précontraint par un ressort (6).

6. Siège de véhicule selon la revendication 1 ou 5, dans lequel le corps de calage (4) est un corps principalement en forme de coin.

7. Siège de véhicule selon l'une quelconque des revendications 1, 5 ou 6, dans lequel le corps de calage (4) est mobile en rotation et comprend une partie de surface en forme d'hélice s'enroulant depuis la partie de petite largeur, via la partie de largeur intermédiaire allant en augmentant, à la partie de grande largeur.

8. Siège de véhicule selon la revendication 7, dans lequel le corps de calage (4) est poussé pour tourner graduellement dans le dégagement lors de la libération du mécanisme de libération afin d'empêcher un déplacement de retour de la partie mobile (5) du repose-tête (1).

9. Siège de véhicule selon la revendication 2 ou l'une quelconque des revendications 5 à 8 lorsqu'elles dépendent de la revendication 2, dans lequel le mécanisme de libération est agencé pour faire pivoter la partie mobile (5) du repose-tête (1) vers l'avant par rapport au dossier du siège de véhicule de sorte qu'un dégagement de forme angulaire (7) s'ouvre entre la partie mobile (5) et la partie immobile (3) à proximité de l'axe de pivot (A) lors du déploiement du mécanisme de libération et que le corps de calage mobile (4) est poussé pour venir dans le dégagement de forme angulaire (7).

10. Siège de véhicule selon les revendications 2 et 9, dans lequel le repose-tête (1) est couplé mobile en rotation autour d'un axe de repli (B) parallèle à l'axe de pivot (A) à la partie immobile (3) pour replier le repose-tête (1) dans une position rangée.

11. Siège de véhicule selon la revendication 3, dans lequel la partie mobile (5) comprend un élément d'engagement de tête (2) et au moins une came tournante (8) assujettie à l'élément d'engagement de tête (2), dans lequel la came tournante (8) est également assujettie mobile en rotation à la partie immobile (3), de sorte que l'espace qui sépare l'élément d'engagement de tête (2) et la partie immobile (3) s'élargit lors de la rotation de la came (8), dans lequel la came (8) comprend un prolongement (9) de sorte que le prolongement (9) suit un trajet circulaire en s'écartant de la partie immobile (3) lors de la rotation de la came (8), de sorte que le dégagement s'ouvre entre le prolongement (9) de la came (8) et la partie immobile (3), et dans lequel le corps de calage mobile (4) est précontraint pour venir dans le dégagement lorsqu'il s'ouvre pour ainsi venir en butée contre le prolongement (9) de la came (8) et contre la partie immobile (3) afin d'empêcher un déplacement de retour de la partie mobile (5) du repose-tête.

12. Siège de véhicule selon la revendication 11, dans lequel la partie immobile (3) est couplée mobile en rotation autour d'un axe de repli (B) aux barres porteuses (11) pour replier le repose-tête (1) dans une position rangée.

13. Siège de véhicule selon les revendications 4 et 11, dans lequel la partie immobile (3) est couplée mobile en rotation autour d'un axe de repli (B) au dossier du siège de véhicule pour replier le repose-tête (1) dans une position rangée.

14. Siège de véhicule selon l'une quelconque des revendications 1 à 13, dans lequel le mécanisme de libération comprend un mécanisme de renvoi (10) servant à renvoyer le repose-tête dans sa position initiale à la suite de la libération du mécanisme de libération, dans lequel le mécanisme de renvoi comprend un moyen apte à ramener le corps de calage mobile en retour dans sa position initiale précontrainte.
